Europäisches Patentamt

European Patent Office

Office européen des brevets

(11) Publication number: **0 145 452**
A2

# EUROPEAN PATENT APPLICATION

(21) Application number: **84308472.4**

(22) Date of filing: **06.12.84**

(51) Int. Cl.⁴: **C 03 C 4/00**, C 03 C 3/16

(30) Priority: **07.12.83 GB 8332681**

(43) Date of publication of application: **19.06.85**
Bulletin 85/25

(84) Designated Contracting States: **AT BE CH DE FR IT LI
LU NL SE**

(71) Applicant: **International Standard Electric Corporation,
320 Park Avenue, New York New York 10022 (US)**

(72) Inventor: **Drake, Cyril Francis, 1 Church Cottages Peldon
Road, Harlow Essex (GB)**
Inventor: **Arch, Alfred John, 19 Glebe Road Greensted,
Ongar Essex (GB)**
Inventor: **Pitt, Gilles David, 43 Farmadine, Saffron
Waldon Essex (GB)**
Inventor: **Neat, Rosamund Carol, 1 Salisbury Road,
Forest Gate London E7 (GB)**

(74) Representative: **Ruffhead, Philip Geoffrey, ITT-UK
Patent Department Maidstone Road Foots Cray, Sidcup
DA14 5HT (GB)**

(54) **Renewable optical surfaces.**

(57) A transparent glass product (11), e.g. for use as an in-
spection window in contact with water, includes at least a sur-
face layer (14) of a water soluble glass. Slow dissolution of the
glass provides a continuously renewable clear surface.

EP 0 145 452 A2

0145452

C.F. Drake-G.D. Pitt-A.J. Arch
R.C. Neat 93-46-4-1

# RENEWABLE OPTICAL SURFACES

This invention relates to optically transparent glass products for use in an aqueous environment and in particular to the maintenance of transparency under such conditions.

Optically transparent glass windows are used in contact with water or an aqueous medium in a variety of applications. A contact problem in such applications is fouling of the glass by water borne dirt and/or microbial life forms. In some cases this fouling can be so extreme as to completely obscure the glass. Since removal of the glass for clearing may in some circumstances be a difficult or costly process it is desirable to minimise or to prevent such fouling.

Various techniques have been proposed for overcoming this problem. The addition of bioxides to the water is a well established practice, but this will not prevent the non-biological fouling that is a particular problem, e.g. in instruments for measuring oil levels in water.

The object of the present invention is to minimise or to overcome this disadvantage.

According to the invention an optically transparent glass product for use in an aqueous environment, is characterized in that at least a surface layer of the glass product comprises a water soluble glass whereby that surface, when in contact with the

- 2 - 0145452

aqueous environment, is continuously renewed by dissolution of the glass.

The surface of the glass product, e.g. an inspection window or an optical transmission element, dissolves at a uniform and controllable rate thus constantly renewing the surface and thereby preventing the deposition of obscuring matter.

Embodiments of the invention will now be described with reference to the accompanying drawing in which:-

Fig. 1 is a sectional view of a glass inspection window having a renewable surface;

and Fig. 2 illustrates a typical surface dissolution characteristic of the inspection window of Fig. 1.

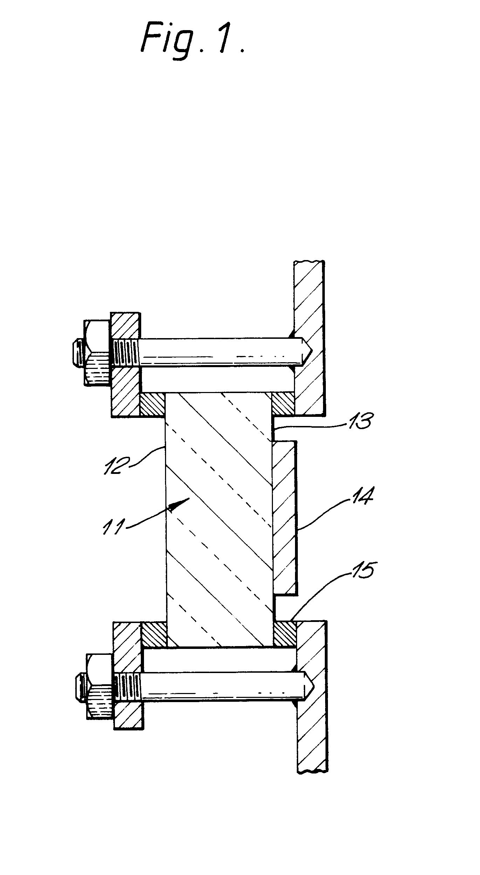

Referring to Fig. 1, the inspection window comprises a transparent glass body 11 having two parallel major surfaces 12, 13 one of which (13) is provided with a surface layer 14 of a transparent water soluble glass. In use the window is mounted via sealing gaskets 15 such that its coated surface 14 is presented to an aqueous medium whereby the soluble layer 14 dissolves slowly at a controlled and uniform rate. This continuously presents a fresh surface to the aqueous medium and thus effectively prevents fouling a consequent loss of transparency of the window.

It will be apparent that it is not essential for the water soluble glass to be confined to a surface layer 14. Thus the entire body may be formed from a water soluble glass.

The body may be formed by any of the conventional techniques of glass working, e.g. it may be cast or cut from a drawn rod. The layer 14 may be applied by fusion of a first or by a vapour deposition process.

A number of glass compositions are suitable for fusing the body on the surface layer 14. However we prefer to employ phosphate glasses including, but not limited to, phosphate pentoxide, one or more alkali metals and one or more alkaline earth metals. The dissolution rate of the glass is controlled via its composition. Thus, an increase in the alkaline earth metal contact reduces the dissolution rate whilst an increase in the alkaline metal contact increases the rate. A significant reduction of the dissolution rate can also be achieved by the addition of alumina to the glass. The techniques of glass dissolution rate control are more fully described in our published specification number 2057420 (C.F. Drake 70).

The following example illustrates the invention.

A glass was prepared by melting a batch comprising the following constituents:

| | |
|---|---|
| $MgH_4(PO_4)_2 \cdot 2H_2O$ | 255g |
| $KH_2PO_4$ | 35g |
| $CaCO_3$ | 30g |
| $Na_2CO_3$ | 152g |
| $NaH_2PO_4$ | 719g |

The mix was fused at $1150^\circ C$ for 1 hour to decompose the constituents to the corresponding oxides giving a glass having the composition:

| | |
|---|---|
| $Na_2O$ | 44.3 mole % |
| $K_2O$ | 1.3 mole % |
| $CaO$ | 3.0 mole % |
| $MgO$ | 10.2 mole % |
| $P_2O_5$ | 41.2 mole % |

The glass was cast on to a cold plate, ground to a powder and was then remelted at $1150^\circ C$ for 1 hour with occasional stirring.

The melt was poured into a cast iron mould to form a cylindrical rod which was annealed by cooling from $310^\circ C$ to $20^\circ C$ over a period of 24 hours. Circular glass windows were prepared by slicing the rod perpendicular to its axis and polishing the parallel faces of each slice.

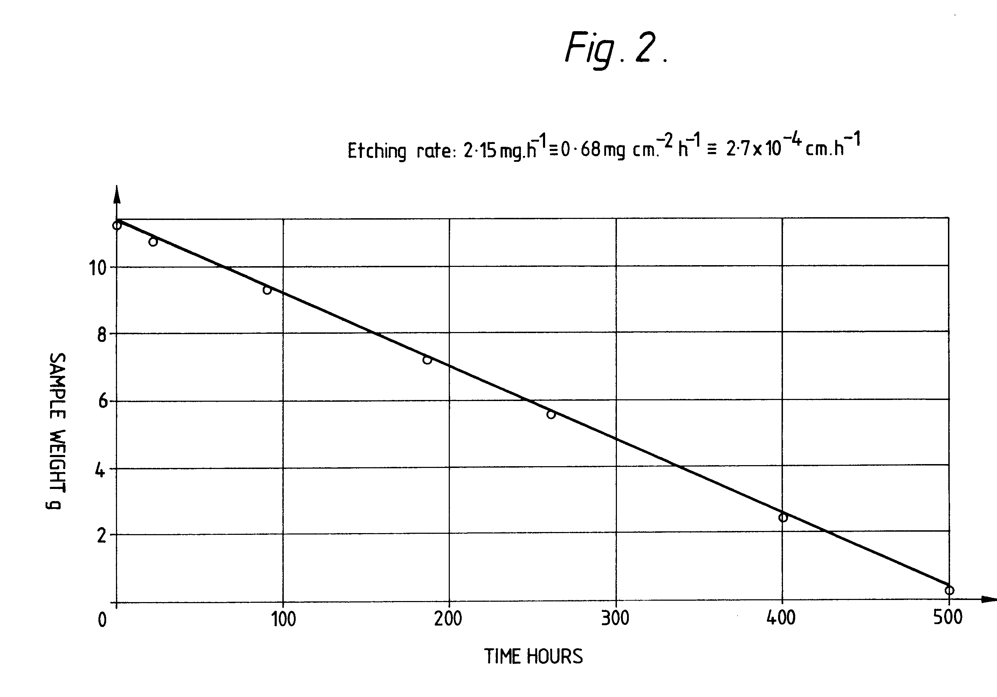

One face of each window was exposed to flowing mains water and periodic measurements were made of the corresponding weight loss, the results being summarised in Fig. 2. Visual examination of the windows after exposure showed that there was surprisingly uniform erosion of the surface with substantially no impairment of the optical quality.

This example illustrates the feasibility of the techniques described herein.

The glass product may be used in a variety of applications. In particular it may be employed in the optical system of an oil in water meter to overcome the problem of window fouling caused by oil deposition. Other applications include transparent glass water interfaces for underwater video devices and for submersible craft.

When there is the possibility of biological fouling, for example by algal or slime growth, small amounts of biocidal inorganic materials may be included in the glass composition. Suitable substances which will not impair the transparency of the window include As, Bi, Zn, Pb, Ba, and Ag. These metals can be added to the batch as their oxides and will liberate biocidal metal ions when the glass is dissolved. Boron can also be added as boric oxide or borax and will liberate borate ions. Similarly fluorine can be added as a metal fluoride and will liberate F-ions.

In a further application the soluble glass may be deposited as a surface film beneath which a pair of sensor electrodes are disposed. Complete dissolution of the surface film exposes the electrodes to the aqueous medium thus providing a high resistance conductive path therebetween. An amplifier coupled to the electrodes may be used to monitor this resistance and thus provide an indication of the dissolution of the surface layer.

Dissolution of the glass may also be monitored by standard optical techniques, e.g. refractive index measurement or inteferometry.

CLAIMS:-

1.      An optically transparent glass product for use in an aqueous environment, characterised in that at least a surface layer of the glass product comprises a water soluble glass whereby that surface, when in contact with the aqueous environment, is continuously renewed by dissolution of the glass.

2.      A glass product as claimed in claim 1 characterized in that it consists entirely of a water soluble glass.

3.      A glass product as claimed in claim 1 or 2, characterized in that the glass is a phosphate glass.

4.      A glass product as claimed in claim 1, 2 or 3, characterised in that the glass includes phosphorus pentoxide the glass forming oxide together with one or more alkali metal and alkaline earth metal oxides.

5.      A glass product as claimed in any one of claims 1 to 4, characterized in that the water soluble glass contains a biocidal material.

6.      A glass product as claimed in claim 5, characterized in that said biocide is Zn, Pb, Bi, Ag, B, As, F or mixtures thereof.

7.      A glass product as claimed in any one of claims 1 to 6, characterized in that said water soluble glass is provided as a surface layer, and wherein electrically conductive electrodes are provided below said layer.

8.      A glass product as claimed in any one of claims 1 to 7 characterized in that it comprises a disc.

# Fig.1.

# Fig. 2.

Etching rate: $2 \cdot 15 \, mg.h^{-1} \equiv 0 \cdot 68 \, mg \, cm.^{-2} \, h^{-1} \equiv 2 \cdot 7 \times 10^{-4} \, cm.h^{-1}$

SAMPLE WEIGHT g

TIME HOURS